(19) Europäisches Patentamt
European Patent Office
Office européen des brevets

(11) **EP 3 635 834 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **18730285.6**

(22) Anmeldetag: **30.05.2018**

(51) Internationale Patentklassifikation (IPC):
**H02J 1/06** (2006.01)    **H02M 3/156** (2006.01)

(52) Gemeinsame Patentklassifikation (CPC):
**H02J 1/06; H02M 1/007; H02M 3/156; H02M 3/158**

(86) Internationale Anmeldenummer:
**PCT/EP2018/064241**

(87) Internationale Veröffentlichungsnummer:
**WO 2018/224375 (13.12.2018 Gazette 2018/50)**

(54) **VERFAHREN UND SCHALTUNGSANORDNUNG ZUM FERNVERSORGEN VON HOCHSTROMGEPULSTEN LASTEN MIT GERINGEM LEISTUNGSVERLUST UND VERRINGERTER SIGNATUR GELEITETER EMISSIONEN**

METHOD AND CIRCUIT ARRANGEMENT FOR REMOTELY SUPPLYING HIGH-CURRENT-PULSED LOADS WITH A LOW POWER LOSS AND A REDUCED CONDUCTED EMISSIONS SIGNATURE

PROCÉDÉ ET SYSTÈME DE CIRCUIT PERMETTANT L'ALIMENTATION À DISTANCE EN CHARGES PULSÉES PAR COURANT HAUTE INTENSITÉ, RÉDUISANT LES PERTES DE PUISSANCE ET L'EMPREINTE DES ÉMISSIONS INDUITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2017 RO 201700345**

(43) Veröffentlichungstag der Anmeldung:
**15.04.2020 Patentblatt 2020/16**

(73) Patentinhaber: **Continental Automotive Technologies GmbH 30165 Hannover (DE)**

(72) Erfinder: **LAZARCIUC, Emil 300558 Timisoara (RO)**

(74) Vertreter: **Continental Corporation c/o Continental Teves AG & Co. OHG Intellectual Property Guerickestraße 7 60488 Frankfurt a. Main (DE)**

(56) Entgegenhaltungen:

WO-A1-2009/083962    US-A1- 2016 276 929
US-A1- 2016 291 663    US-A1- 2016 330 397
US-A1- 2017 060 158    US-B1- 6 798 177

• MOTOROLA: "MC34063A,MC33063A,DC-to-DC Converter Control Circuits - Semiconductor Technical Data", INTERNET CITATION, 1. Januar 1996 (1996-01-01), Seiten 1-12, XP002587346, Gefunden im Internet: URL:http://www.ic-on-line.cn/IOL/datasheet /mc33063_78641.pdf [gefunden am 2010-06-10]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Hintergrund der Erfindung

Aktive Sicherheit in Automobilanwendungen für Fahrzeuginterieur, wie etwa Fahrerüberwachung und 3D-Gestenerkennung nutzen Infrarotkameras, um den Einfluss von Umgebungslicht zu verringern. Zielbeleuchtung für solche Systeme wird durch Verwendung von hochstromgepulsten LEDs oder Laser-Dioden erreicht. In solchen kamerabasierten Systemen könnten sich die Beleuchtungsquelle und die zugehörigen Treiber dasselbe Vorrichtungsgehäuse mit der Kamera teilen oder könnten getrennt platziert und fernversorgt werden. In beiden Situationen gibt es eine Versorgungseinheit und eine mit Kabeln oder Kabelbaumdrähten verbundene fernversorgte Einheit. Um die Leistungsaufnahme zu verringern, wird die die Beleuchtungsquelle mit kurzen Pulsen hohen Stroms gesteuert, die durch ein globales Schussmittel eines Bildsensors ausgelöst und für jeden vertikalen Rahmen wiederholt werden.

Das mit dem Stand der Technik verknüpfte Problem ist die Kabelbaumverlustleistung wegen der hohen Kabelbaumströme. Eine Stromversorgungseinheit erzeugt elektromagnetische Energievariationen und ein gewisser Anteil davon wird auf die elektrischen Drähten geleitet, welche die Stromversorgungseinheit mit der versorgten Einheit verbinden. Die auf die elektrischen Drähte geleiteten elektromagnetischen Energievariationen werden als geleitete Emissionen bezeichnet. Um die geleiteten Emissionen zu messen, werden Messwandler, wie etwa Nahfeldsonden oder mit Spektrumanalysatoren verbundene Stromsonden verwendet. Die Amplitude der gemessenen geleiteten Störungen innerhalb eines gewissen Frequenzbereichs repräsentiert die Signatur der geleiteten Emissionen. Batteriestrom von der Versorgungseinheit und der Kabelbaumstrom weisen dieselbe Form wie der Laststrom auf, mit hohen Schwankungen, die nur für mittlere und hohe Frequenzen durch die Versorgungseinheit und Filter fernversorgter Einheiten gefiltert werden. Bei niedrigen Frequenzen gibt es keine signifikante Verbesserung hinsichtlich geleiteter Emissionen.

Das Dokument US20160182107A1 offenbart eine Kompensationsschaltung, welche ausgebildet ist zum Kompensieren eines Verlusts an niederfrequentem Signalinhalt eines Eingangssignals an einem Empfängereingang. Die Kompensationsschaltung beinhaltet eine Schaltschaltung und eine mit der Schaltschaltung gekoppelte Summierschaltung. Die Schaltschaltung ist ausgebildet zum Empfangen einer ersten Vielzahl von digitalisierten Werten, die aus einem Empfängerausgangssignal abgetastet wurden. Die Summierschaltung ist ausgebildet zum Erzeugen eines Summensignals auf der Grundlage einer Kombination einer ersten Vielzahl von durch die Schaltschaltung ausgewählten Eingangswerten. Das Auswählen basiert auf der ersten Vielzahl von digitalisierten Werten. Die Kompensationsschaltung ist ausgebildet zum Bereitstellen eines Kompensationssignals an dem Empfängereingang, um den Verlust des niederfrequenten Signalinhalts des Eingangssignals zu kompensieren. Das Kompensationssignal basiert auf dem Summensignal und ist eine Funktion von mindestens einem Verstärkungswert.

Das Dokument US2016330397A1 offenbart ein Leistungssystem für einen Streaming Media Player, das ein Kabel mit einem ersten Ende und einem zweiten Ende, das dem ersten Ende entgegengesetzt ist, aufweist. Das erste Ende des Kabels kann eingerichtet und ausgebildet sein zum Empfangen von Leistung von einer leistungsbegrenzten USB-Leistungsquelle. Das Leistungssystem kann auch eine mit dem Kabel elektrische gekoppelte elektronische Schaltung beinhalten. Die elektronische Schaltung kann einen Superkondensator beinhalten, der eingerichtet und ausgebildet ist zum Speichern von zumindest einem Teil der Energie von der USB-Leistungsquelle, wenn durch den Streaming Media Player angeforderte Leistung kleiner als eine von der USB-Leistungsquelle verfügbare Leistung ist, und dann mindestens einen Teil der gespeicherten Energie freigeben, wenn die von dem Streaming Media Player angeforderte Leistung die verfügbare Leistung von der USB-Leistungsquelle übersteigt. Dokument US 2016/291663 A1 beschreibt eine Schaltungsanordnung mit den Merkmalen des Oberbegriffs des Patentanspruch 1.

Kurzdarstellung der Erfindung

Das oben erwähnte Problem kann durch ein Verfahren und eine Schaltungsanordnung für Fernversorgung von hochstromgepulsten Lasten mit geringem Stromverlust und verringerter Signatur geleiteter Emissionen gelöst werden.

Die Aufgabe der vorliegenden Erfindung ist, ein Verfahren und eine Schaltungsanordnung bereitzustellen zum Verringern:

a) einer Verlustleistung über den Kabelbaum für pulsstromfernversorgte Lasten ohne Verringerung eines Kabelbaumserienwiderstands
b) einer niederfrequenten Signatur von geleiteten Emissionen aufgrund von kleineren Stromschwankungen und kleinerer Stromamplitude in den Kabelbaum.

Demgemäß ist es die Aufgabe der vorliegenden Erfindung, ein Verfahren und eine Schaltungsanordnung bereitzustellen, insbesondere eine Schaltungsanordnung eines Fahrzeugs für Fernversorgung von hochstromgepulsten Lasten mit geringem Stromverlust und verringerter Signatur von geleiteten Emissionen, wobei die Schaltungsanordnung aufweist: eine Versorgungseinheit, eine fernversorgte Einheit, einen ersten Kabelbaumdraht und einen zweiten Kabelbaumdraht, welcher die fernversorgte Einheit mit der Versorgungseinheit verbindet wobei die Schaltungsanordnung ferner eine in der Versorgungseinheit platzierte Schutzschaltung aufweist, einen Aufwärtswandler, platziert in der Versorgungseinheit, ein erstes elektrisches Filter mit einem ersten Kondensator und einer ersten Induktivität, platziert in der Versorgungseinheit, eine Ausgangsrückkopplungsschleife für Strom und Spannung des Aufwärtswandlers, platziert in der Versorgungseinheit, wobei die Schaltungsanordnung ein zweites elektrisches Filter, platziert in der fernversorgten Einheit, einen Abwärtswandler, platziert in der fernversorgten Einheit, einen Tankkondensator, platziert in der fernversorgten Einheit, einen Ausgangskondensator, platziert in der fernversorgten Einheit, eine elektrische Last, platziert in der fernversorgten Einheit, aufweist, wobei ein Lastpulsaktivierungssignal den Aufwärtswandler in der fernversorgten Einheit steuert und somit den Tankkondensator entlädt, auf diesem Wege Strom an die elektrische Last zuführend, wobei die Stromzufuhr von der Versorgungseinheit an die fernversorgte Einheit mit verringertem und konstantem Strom, kleiner als der Abwärtswandlerversorgungsstrom, vorgenommen wird.

Das Verfahren zum Betrieb der Schaltungsanordnung der vorliegenden Erfindung weist ferner eine zeitliche Abfolge zum Laden und Entladen des in der fernversorgten Einheit platzierten Tankkondensators auf, um somit eine Ladung des Tankkondensators bei niedrigeren Stromwerten zu ermöglichen, wie etwa, um niedrige Leistungsverluste und verringerte Signatur geleiteter Emissionen zu erhalten.

Das Verfahren und die Schaltungsanordnung der vorliegenden Erfindung mit ihren Komponenten wird hier weiter detailliert beschrieben.

Kurze Beschreibung der Zeichnungen

Weitere Merkmale, Nutzen und Ausführungsformen der Erfindung werden bei Berücksichtigung der folgenden Beschreibung offensichtlich, unter Verwendung von Figuren, in welchen schematisch:

Fig.1    ein Beispiel für eine Anwendung zeigt, in der die Erfindung nicht explizit dargestellt ist, für welche die vorliegende Erfindung aber nutzbringend ist. Die Anwendung ist eine Fahrzeugfahrerüberwachung und 3D-Gestenerkennung für einen Fahrer

Fig.2    eine Schaltungsanordnung eines kamerabasierten Systems für die in Fig.1 beispielhaft dargestellte Anwendung zeigt, wo, um die Leistungsaufnahme zu verringern, eine Beleuchtungsquelle mit kurzen Pulsen mit hohem Strom gesteuert wird

Fig.3    eine Schaltungsanordnung eines kamerabasierten Systems für dieselbe in Fig.1 beispielhaft dargestellte Anwendung zeigt, wo, um die Leistungsaufnahme zu verringern, die aus mehreren LEDs bestehende Beleuchtungsquelle mit kurzen Pulsen mit hohem Strom gesteuert wird

Fig.4    das Timingdiagramm und verknüpfte Wellenformen der durch Fig.2 und Fig.3 präsentierten Schaltungsanordnungen zeigt

Fig.5    eine verbesserte Schaltungsanordnung für die in Fig.1 beispielhaft dargestellte Anwendung zeigt, bei der die Versorgungseinheitsspannung erhöht ist, um den Strom in den Kabelbaum, folglich die Verlustleistung, zu verringern.

Fig.6    das Timingdiagramm und verknüpfte Wellenformen der durch Fig.5 präsentierten Schaltungsanordnungen zeigt

Fig.7    eine erfindungsgemäße Schaltungsanordnung für die in Fig.1 beispielhaft dargestellte Anwendung zeigt, wo, um Kabelbaumverlustleistung und Signatur geleiteter Emissionen weiter zu verringern, eine weitere Verbesserung mit einer zusätzlichen Ausgangsstromschleife und einem im Inneren der fernversorgten Einheit befindlichen Tankkondensator präsentiert wird.

Fig.8    das Timingdiagramm und verknüpfte Wellenformen der durch Fig.7 präsentierten erfindungsgemäßen Schaltungsanordnungen zeigt

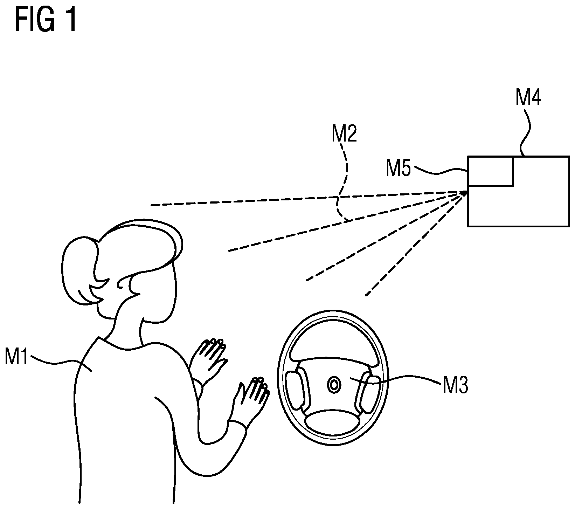

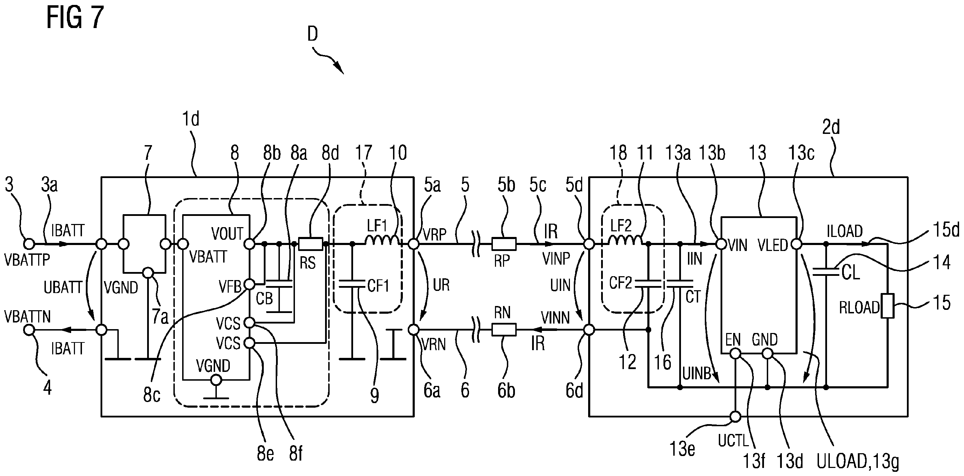

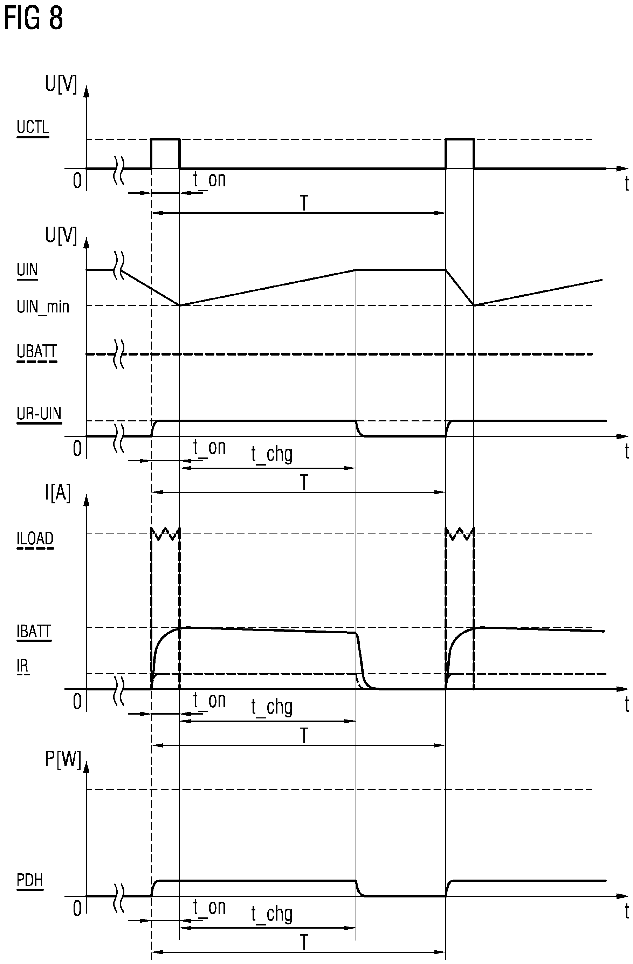

Figuren 1 bis 6 zeigen Beispiele, in denen die Erfindung nicht explizit dargestellt ist. In Figur 7 und 8 sind erfindungsgemäße Beispiele dargestellt.

Identifikation der Schaltungsanordnungskomponenten in den Zeichnungen

In den Zeichnungen sind die unten genannten Elemente und Komponenten durch die folgenden Zahlen und Buchstaben gekennzeichnet:

*Schaltungsanordnungen*

Eine erste Schaltungsanordnung A
Eine zweite Schaltungsanordnung B
Eine dritte Schaltungsanordnung C
Eine vierte Schaltungsanordnung D

*Versorgungseinheiten*

Eine erste Versorgungseinheit 1a in der ersten Schaltungsanordnung A
Eine zweite Versorgungseinheit 1b in der zweiten Schaltungsanordnung B
Eine dritte Versorgungseinheit 1c in der dritten Schaltungsanordnung C
Eine vierte Versorgungseinheit 1d in der vierten Schaltungsanordnung D

*Fernversorgte Einheiten*

Eine erste fernversorgte Einheit 2a in der ersten Schaltungsanordnung A
Eine zweite fernversorgte Einheit 2b in der zweiten Schaltungsanordnung B
Eine dritte fernversorgte Einheit 2c in der dritten Schaltungsanordnung C
Eine vierte fernversorgte Einheit 2d in der vierten Schaltungsanordnung D

*Kabelbaumdrähte*

Ein erster Kabelbaumdraht 5 und ein zweiter Kabelbaumdraht 6 zum Verbinden der fernversorgten Einheiten 2a, 2b, 2c, 2d mit den Versorgungseinheiten 1a, 1b, 1c, 1d

*Batterie*

Batterieanschlüsse 3 und 4

*Schutzschaltung*

Eingangsschutzschaltung 7

*Filter*

Ein erstes elektrisches Filter 17 mit einem ersten Kondensator CF1 9 und einer ersten Induktivität LF1 10
Ein zweites elektrisches Filter 18 mit einem zweiten Kondensator CF2 12 und einer zweiten Induktivität LF2 11

*Aufwärtswandler*

Aufwärtswandler 8
Aufwärtswandler-Filterkondensator 8a

Aufwärtswandler-Ausgang 8b
*Abwärtswandler*
Abwärtswandler 13

*Andere Elemente*

Ausgangskondensator CL 14
Elektrische Last 15
LEDs 15a, 15b und 15c
Tankkondensator CT 16
Spannungsrückkopplungsschleife für den Aufwärtswandler (8b und 8c)
Stromrückkopplungsschleife für den Aufwärtswandler (8e und 8f)

Zusammenstellung von Kennzeichnungen für physikalische Größen

Die folgenden, unten bezeichneten physikalischen Größen sind durch die folgenden Zahlen und Buchstaben gekennzeichnet:

- IIN ist der Abwärtswandlerversorgungsstrom 13a
- IR ist der Kabelbaumstrom 5c
- IBATT ist der Batteriestrom 3a
- ILOAD ist der Laststrom 15d
- UR ist die Versorgungseinheitsausgangsspannung
- ULOAD ist die Lastspannung 13g
- VINP ist das elektrische Potential des positiven Versorgungsverbindungspunkts mit der fernversorgten Einheit 5d
- VINN ist das elektrische Potential des negativen Versorgungsverbindungspunkts mit der fernversorgten Einheit 6d
- VIN ist das elektrische Potential des positiven Versorgungsverbindungspunkts zu dem Abwärtswandler 13b
- VRP ist das elektrische Potential des positiven Versorgungsverbindungspunkts von der Versorgungseinheit 5a
- VRN ist das elektrische Potential des negativen Versorgungsverbindungspunkts von der Versorgungseinheit 6a
- VLOAD ist das elektrische Ausgangspotential des Abwärtswandlers 13c
- EN- (enable) ist das Abwärtswandler-Lastpulsaktivierungssignal 13h
- VGND ist das elektrische Potential der Masse, Referenzpotential 7a
- UIN ist die Eingangsspannung der fernversorgten Einheit
- UINB ist die Eingangsspannung des Abwärtswandlers
- UIN_min ist die minimale Eingangsspannung der fernversorgten Einheit nach Entladung des Tankkondensators.
- $\Delta$U ist die Tankkondensatorspannungsentladung am Ende der Lastpulsaktivierungszeitdauer t_on
- Ca ist die elektrische Kapazität des Tankkondensators CT
- RP ist der elektrische Serienwiderstand 5b des ersten Kabelbaumdrahts 5, welcher die Versorgungeinheit mit der fernversorgten Einheit verbindet
- RN ist der elektrische Serienwiderstand 6b des zweiten Kabelbaumdrahts 6, welcher die Versorgungeinheit mit der fernversorgten Einheit verbindet
- RLOAD ist der elektrische Lastwiderstand gemäß dem Ohm'schen Gesetz 15
- $\eta$8 ist der Aufwärtswandlerwirkungsgrad
- $\eta$13 ist der Abwärtswandlerwirkungsgrad
- PDH ist die Kabelbaumverlustleistung
- PDH_avg ist die mittlere Kabelbaumverlustleistung
- T ist die Wiederholungsperiode des Lastpulsaktivierungssignals UCTL
- t_on ist die durch das Lastaktivierungssignal UCTL gegebene Lastpulsaktivierungszeitdauer
- t_chg Abkürzung für t_charge ist die Ladeperiode des Tankkondensators CT
- VOUT ist das Ausgangspotential des Aufwärtswandlers 8b
- VFB ist das elektrische Rückkopplungsschleifenpotential des Aufwärtswandlers 8c
- UCTL ist ein durch auf VINN 13e referenzierte Lastaktivierungssteuerspannung der fernversorgten Einheit repräsentiertes Lastpulsaktivierungssignal.
- RS ist der elektrische Stromnebenschlusswiderstand 8d
- VCS+ ist das höhere elektrische Potential der Stromrückkopplungsschleife 8f
- VCS- ist das niedrigere elektrische Potential der Stromrückkopplungsschleife 8e

Formeln

*Die folgenden Formeln* werden zur Berechnung physikalischer Größen für elektrische Ströme, elektrische Spannungen und elektrische Leistungen innerhalb der erfindungsgemäßen Schaltungsanordnung verwendet.

Die Formel F1 repräsentiert ein Berechnungsverfahren für den Abwärtswandlerversorgungsstrom, den Kabelbaumstrom und den Batteriestrom

$$IIN = IR = IBATT = ILOAD \cdot \frac{ULOAD}{UIN \cdot \eta13} \qquad (F1)$$

wobei gilt:

IIN ist der Abwärtswandlerversorgungsstrom
IR ist der Kabelbaumstrom
IBATT ist der Batteriestrom
ILOAD ist der Laststrom

ULOAD ist die Lastspannung
UIN ist die Eingangsspannung der fernversorgten Einheit
$\eta13$ ist der Abwärtswandlerwirkungsgrad

Formel F2 repräsentiert ein Berechnungsverfahren für die Eingangsspannung der fernversorgten Einheit

$$UIN = UR - (RP + RN) \cdot IR \qquad (F2)$$

wobei gilt:

UIN ist die Eingangsspannung der fernversorgten Einheit UR ist die Versorgungseinheitsausgangsspannung
RP ist der Serienwiderstand 5a des ersten Kabelbaumdrahts 5, welcher die Versorgungeinheit mit der fernversorgten Einheit verbindet
RN ist der Serienwiderstand 6a des zweiten Kabelbaumdrahts 6, welcher die Versorgungeinheit mit der fernversorgten Einheit verbindet
IR ist der Kabelbaumstrom

Formel F3 repräsentiert ein Berechnungsverfahren für den Kabelbaumstrom

$$IR = \frac{UR - \sqrt{UR^2 - \frac{4 \cdot (RP+RN) \cdot ULOAD * ILOAD}{\eta13}}}{2 \cdot (RP+RN)} \qquad (F3)$$

wobei gilt:

UIN ist die Eingangsspannung der fernversorgten Einheit UR ist die Versorgungseinheitsausgangsspannung
RP ist der Serienwiderstand 5a des ersten Kabelbaumdrahts 5, welcher die Versorgungeinheit mit der fernversorgten Einheit verbindet
RN ist der Serienwiderstand 6a des zweiten Kabelbaumdrahts 6, welcher die Versorgungeinheit mit der fernversorgten Einheit verbindet
IR ist der Kabelbaumstrom

ULOAD ist die Lastspannung

ILOAD ist der Laststrom

$\eta 13$ ist der Abwärtswandlerwirkungsgrad

Formel F4 repräsentiert ein Berechnungsverfahren für die Kabelbaumverlustleistung

$$PDH = (RP + RN) \cdot IIN^2 \qquad (F4)$$

wobei gilt:

PDH ist die Kabelbaumverlustleistung

RP ist der Serienwiderstand 5a des ersten Kabelbaumdrahts 5, welcher die Versorgungeinheit mit der fernversorgten Einheit verbindet

RN ist der Serienwiderstand 6a des zweiten Kabelbaumdrahts 6, welcher die Versorgungeinheit mit der fernversorgten Einheit verbindet

IIN ist der Abwärtswandlerversorgungsstrom

Formel F5 repräsentiert ein Berechnungsverfahren für die mittlere Kabelbaumverlustleistung

$$PDH\_avg = PDH \cdot \frac{t\_on}{T} \qquad (F5)$$

wobei gilt:

PDH_avg ist die mittlere Kabelbaumverlustleistung

PDH ist die Kabelbaumverlustleistung

t_on ist die Lastpulsaktivierungszeitdauer

T ist die Wiederholungsperiode

Formel F6 repräsentiert ein Berechnungsverfahren für den Batteriestrom

$$IBATT = \frac{UR}{UBATT \cdot \eta 8} \cdot IR \qquad (F6)$$

wobei gilt:

IBATT ist der Batteriestrom

UR ist die Versorgungseinheitsausgangsspannung

UBATT ist die Batteriespannung

IR ist der Kabelbaumstrom

$\eta 8$ ist der Aufwärtswandlerwirkungsgrad

Formel F7 repräsentiert ein Berechnungsverfahren für die Spannungsentladung des Tankkondensators CT während der Lastpulsaktivierungszeitdauer:

$$UIN - UIN\_min = \Delta U = (IIN - IR) \cdot \frac{t\_on}{Ca} \qquad (F7)$$

wobei gilt:

t_on ist die Lastpulsaktivierungszeitdauer
UIN ist die Eingangsspannung der fernversorgten Einheit UIN_min ist die minimale Eingangsspannung der fernversorgten Einheit nach Entladung des Tankkondensators, welche niedriger als UIN ist
$\Delta U$ ist die Tankkondensatorspannungsentladung während der Lastpulsaktivierungszeitdauer t_on
IIN ist der Abwärtswandlerversorgungsstrom
IR ist der Kabelbaumstrom
Ca ist die elektrische Kapazität des Tankkondensators CT

Formel F8 repräsentiert ein Berechnungsverfahren für die Ladezeit des Tankkondensators CT:

$$t\_charge = \Delta U \cdot \frac{Ca}{IIN} = (IIN - IR) \cdot \frac{t\_on}{IIN} \qquad (F8)$$

wobei gilt:

t_charge (im Text und in den Zeichnungen als t_chg abgekürzt) ist die Tankkondensatorladezeit
$\Delta U$ ist die Tankkondensatorspannungsentladung während der Lastpulsaktivierungszeitdauer t_on
Ca ist die elektrische Kapazität des Tankkondensators CT IR ist der Kabelbaumstrom
t_on ist die Lastpulsaktivierungszeitdauer
IIN ist der Abwärtswandlerversorgungsstrom

Detaillierte Beschreibung

Fig.1 zeigt schematisch ein Beispiel für eine Anwendung, in der die Erfindung nicht explizit dargestellt ist, für welche die vorliegende Erfindung aber nutzbringend ist. Die Anwendung ist für Fahrzeugfahrerüberwachung und 3D-Gestenerkennung für einen Fahrer M1, einschließlich einer Lenkradbewegung M3, wobei die Beleuchtungsquelle M4 mit kurzen Pulsen hohen Stroms gesteuert wird, die durch ein globales Schussmittel eines Bildsensors M3 ausgelöst und für jeden vertikalen Rahmen M2 wiederholt werden. In solchen Anwendungen könnten sich die Beleuchtungsquelle M4 und die zugehörigen Treiber dasselbe Vorrichtungsgehäuse mit einer Videokamera teilen oder könnten getrennt platziert und fernversorgt werden. In jedem Fall wird es eine Versorgungseinheit und eine mit Kabeln oder Kabelbaumdrähten verbundene fernversorgte Einheit geben.

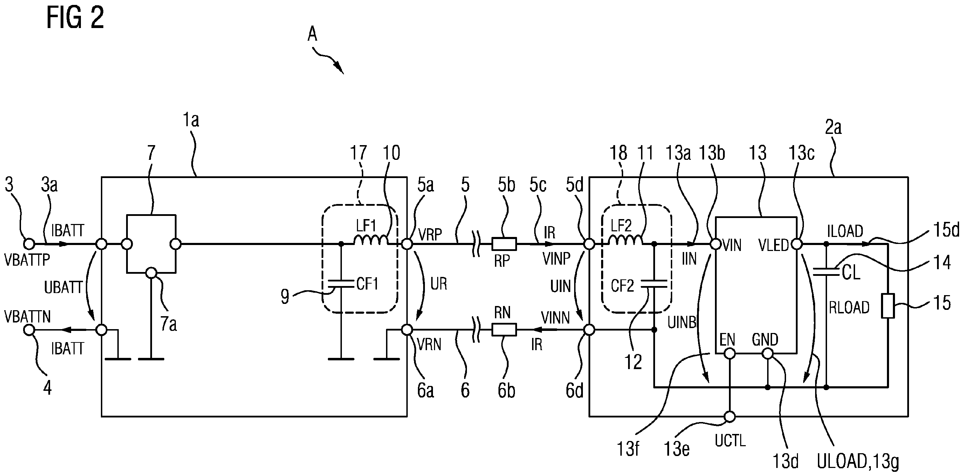

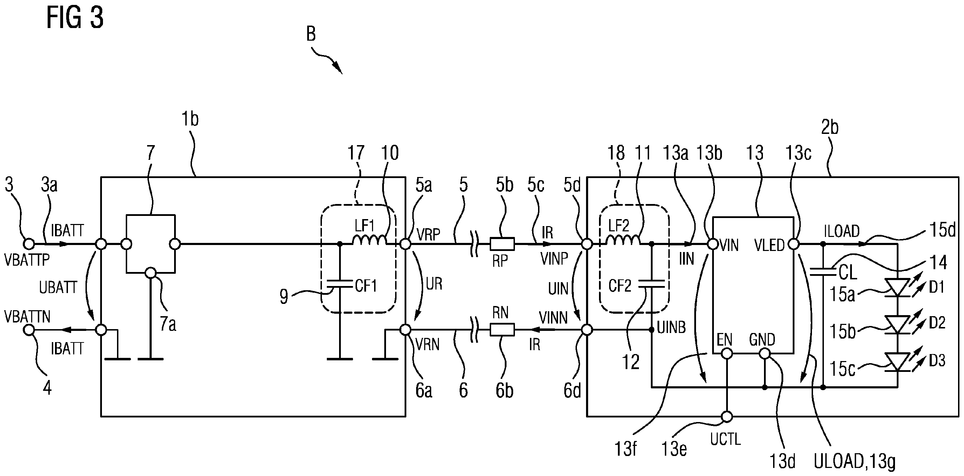

*Fig.2* präsentiert eine Schaltungsanordnung für die durch Fig.1 beispielhaft dargestellte Anwendung, bestehend aus einer Versorgungseinheit 1a, verbunden mit Batterieanschlüssen 3 und 4 mit einer Ausgangsspannung UBATT, eine fernversorgte Einheit 2a, verbunden mit der Versorgungseinheit über lange Kabelbaumdrähte 5 und 6 mit äquivalenten Serienwiderständen 5a und 6a. Die Kabelbaumdrahtverbindung könnte unter Verwendung eines Kabels mit verdrilltem Drahtpaar (twisted pair) oder eines Koaxialkabels implementiert sein. Die Versorgungseinheit 1 enthält eine Eingangsschutzschaltung 7 und ein elektrisches Filter 18 mit einem Kondensator CF1 9 und einer Induktivität LF1 10 zusammen mit einigen anderen, nicht dargestellten, funktionalen Schaltungen. Die fernversorgte Einheit 2 enthält ein elektrisches Filter 18 mit einem Kondensator CF2 12 und einer Induktivität LF2 11, einen Abwärtswandler 13 (nicht auf eine bestimmte Topologie eingeschränkt), einen Ausgangskondensator 14 und eine Last 15, beispielsweise bestehend aus LEDs 15a, 15b und 15c, dargestellt in *Fig.3*.
Der Zweck der elektrischen Filter 17 und 18 besteht darin, mittlere Frequenzen in dem Bereich von 100 kHz bis 26 MHz und die hohen Frequenzen in dem Bereich von 26 MHz bis 2,4 GHz in dem Spektrum von Signaturen von geleiteten Emissionen für den zugeführten Strom zu verringern. Ein nicht dargestellter Bildsensor könnte Teil der Versorgungseinheit, der fernversorgten Einheit oder einer anderen Einheit sein. Für diese Erfindung relevant ist das Lastpulsaktivierungssignal UCTL 13e, welches den Abwärtswandler 13 steuert. Die elektrische Last wird durch den Abwärtswandler 13 mit einem konstanten Laststrom ILOAD 15d versorgt, wenn das Lastpulsaktivierungssignal UCTL aktiv ist, eingestellt auf einen richtigen Wert gemäß einer Anwendungsanforderung.
Die Ausgangsspannung 13g hängt von dem eingestellten Strom, Lastparametern (die Anzahl und die elektrischen Parameter der LEDs) und dem Strom ILOAD 15d ab. Die Spannung der fernversorgten Einheit UIN und die Eingangsspannung des Abwärtswandlers UINB 13f sollten höher als die Ausgangsspannung des Abwärtswandlers ULOAD 13g sein, um eine richtige Stromregelung zu erreichen. Für Niederfrequenzen könnte der Einfluss der Filterelemente LF2 11, CF2 12, LF1 10 und CF1 9 vernachlässigt werden, um die Erläuterungen zu vereinfachen. Aus denselben Gründen wird der Einfluss der Eingangsschutzschaltung 7 ebenfalls vernachlässigt. Der Abwärtswandlerversorgungsstrom IIN 13a ist derselbe wie der Kabelbaumstrom IR 5b, der Batteriestrom IBATT 3a und hängt von ILOAD, ULOAD, UIN, dem Abwärtswandlerwirkungsgrad $\eta$13 und den elektrischen Kabelbaumserienwiderständen RP 5a und RN 6a gemäß der folgenden Formel ab:

$$IIN = IR = IBATT = ILOAD \cdot \frac{ULOAD}{UIN \cdot \eta 13}$$

(F1)

Die Eingangsspannung der fernversorgten Einheit UIN ist durch die Batteriespannung UBATT=UR minus dem Kabelbaumspannungsabfall gegeben:

$$UIN = UR - (RP + RN) \cdot IR$$

(F2)

Durch Einsetzen der UIN-Gleichung (F2) in (F1) und Auflösen der Gleichung zweiter Ordnung mit IR als Variable, erhalten wir:

$$IR = \frac{UR - \sqrt{UR^2 - \frac{4 \cdot (RP+RN) \cdot ULOAD \cdot ILOAD}{\eta 13}}}{2 \cdot (RP+RN)}$$

(F3)

Der Kabelbaumleistungsverlust oder die Kabelbaumverlustleistung wird durch die folgende Formel angegeben:

$$PDH = (RP + RN) \cdot IIN^2$$

(F4)

Die mittlere Kabelbaumverlustleistung wird unter Berücksichtigung der Lastpulsaktivierungszeitdauer t_on und der Wiederholungsperiode für das Lastpulsaktivierungssignal T berechnet:

$$PDH\_avg = PDH \cdot \frac{t\_on}{T}$$

(F5)

Berechnungsbeispiel: für UBATT=13,5V, ULOAD=9V, RP=RN=0,5 Ω, ILOAD=2A und _13=0,85 erhalten wir: Batterieeingangsstrom IBATT=IR=1,812A, Kabelbaumverlustleistung PDH=3,283W und Lastleistung PLOAD=18W. Falls die Lastpulsaktivierungszeitdauer t_on=3ms (Millisekunden) und die Rahmenperiode T=33ms für eine 30Hz (Hertz) Rahmenrate ist, beträgt die mittlere Kabelbaumverlustleistung PDH_avg=0,2W. Für die bekannten existierenden Lösungen für das oben präsentierte Beispiel repräsentiert die Kabelbaumverlustleistung PDH ungefähr 18,23% der installierten Lastleistung.

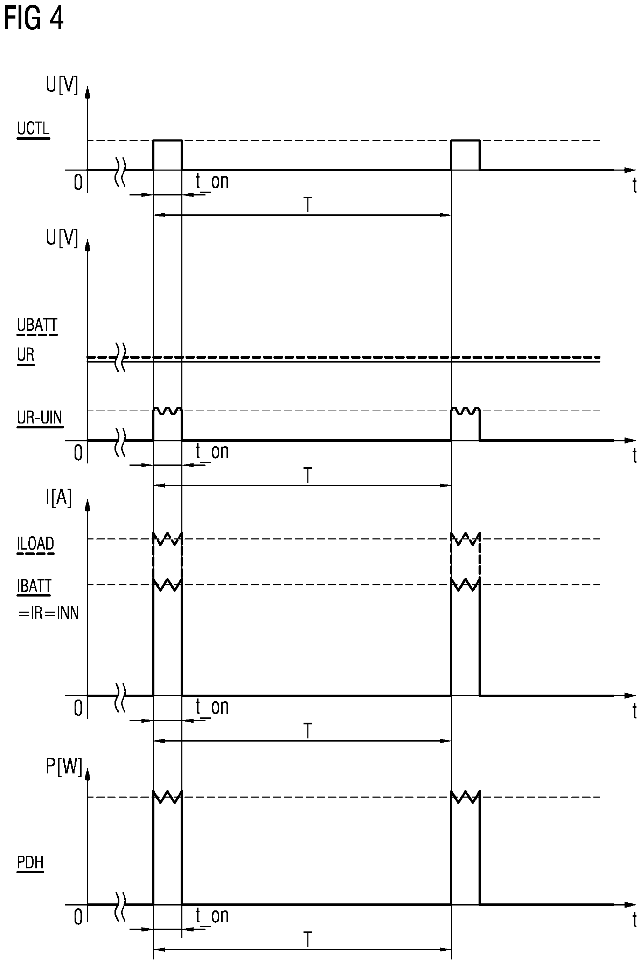

Die Fig.4 zeigt das Timingdiagramm und verknüpfte Wellenformen der durch Fig.2 und Fig.3 präsentierten Schaltungsanordnungen.

Um die Kabelbaumverlustleistung zu verringern, gibt es basierend auf Formel F4 einige Verfahren.

Ein Verfahren besteht darin, den Kabelbaumersatzwiderstand zu verringern, was zusätzliche Kosten für hochqualitative Kabelbaumkabel zur Folge hat. Ein weiteres Verfahren besteht im Erhöhen der Versorgungseinheitsausgangsspannung UR, um den Strom, folglich die Verlustleistung, in den Kabelbaum zu verringern.

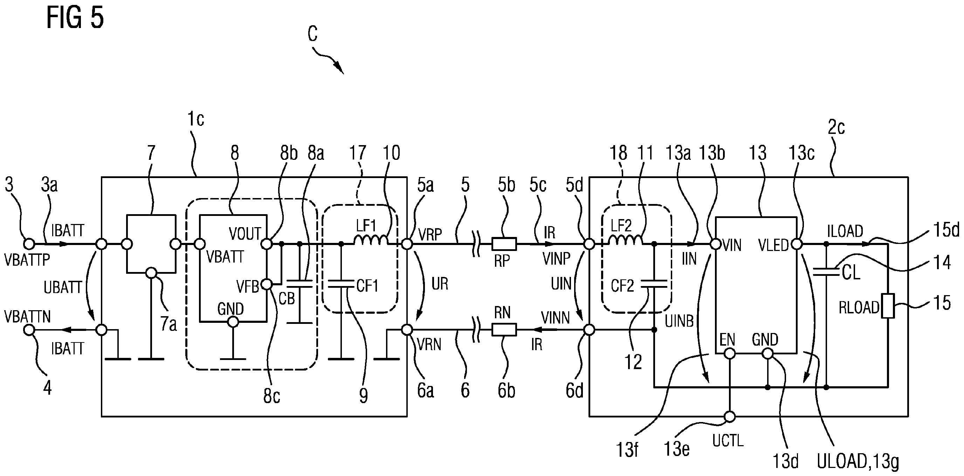

Ein solche Schaltungsanordnung ist in *Fig. 5* präsentiert. Im Inneren der Versorgungseinheit 1, zwischen der Eingangsschutzschaltung 7 und dem elektrischen Ausgangsfilter 17, ist ein Schalt-Aufwärtswandler 8 eingesetzt, welcher nicht auf eine bestimmte Topologie beschränkt ist, der eine Ausgangsspannungsrückkopplungsschleife des Aufwärtswandlers 8c und einen mit dem Ausgang 8b verbundenen Filterkondensator 8a aufweist.

Der Kabelbaumstrom ist durch Formel (F3) gegeben und der Batteriestrom IBATT wird mit der folgenden

Gleichung berechnet:

$$IBATT = \frac{UR}{UBATT \cdot \eta8} \cdot IR \qquad (F6)$$

wobei gilt: $\eta8$- repräsentiert den

Aufwärtswandlerwirkungsgrad.

Berücksichtigt man dasselbe Beispiel, nunmehr mit UR=27 V (zweimal der UBATT-Wert) und $\eta8$ =0,9, dann sind der Kabelbaumstrom IR, der Batteriestrom IBATT und die Kabelbaumverlustleistung folgendermaßen: IR= 0,809 A, IBATT= 1,797 A, PDH= 0,654 W, mittlere Kabelbaumverlustleistung PDH_avg=0,04 W. Die Kabelbaumverlustleistung ist in diesem Falle um einen Faktor 5 verringert, was 3,6% der installierten Lastleistung repräsentiert.

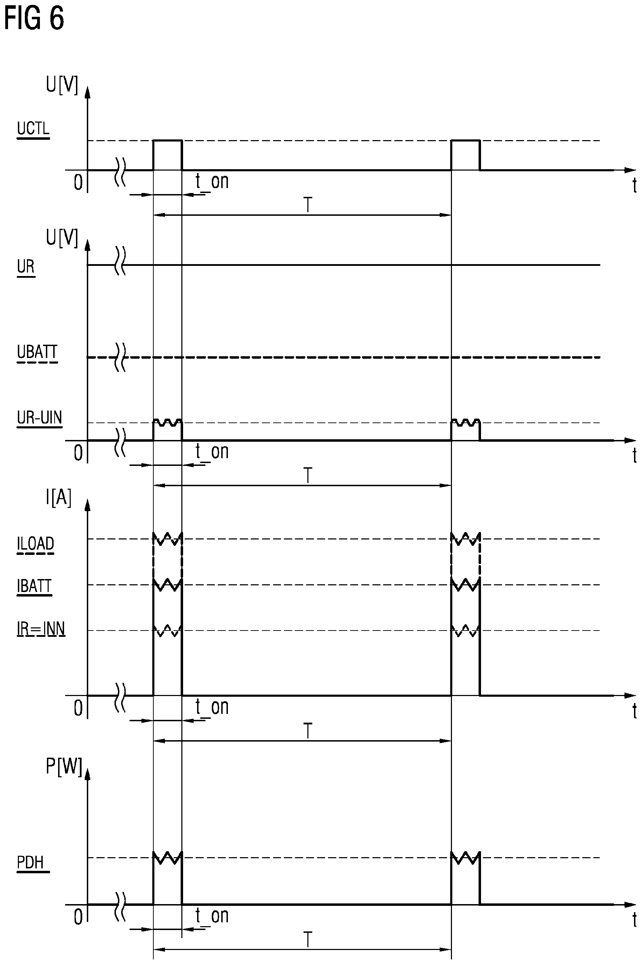

Die Fig.6 zeigt das Timingdiagramm und verknüpfte Wellenformen der durch Fig.5 präsentierten Schaltungsanordnungen.

Um die Kabelbaumverlustleistung und die Signatur der geleiteten Emissionen noch mehr zu verringern, wird in *Fig. 7* eine weitere Verbesserung der in Fig.5 präsentierten Schaltungsanordnung präsentiert. Die in Fig. 7 dargestellte Schaltungsanordnung entspricht der erfindungsgemäßen Schaltungsanordnung.

Die erfindungsgemäße Schaltungsanordnung besteht aus einem im Inneren der Versorgungseinheit 1 befindlichen Aufwärtswandler 8 mit einer zusätzlichen Ausgangsstromschleife und einem im Inneren der fernversorgten Einheit 2 befindlichen Tankkondensator CT 16. Ein Tankkondensator ist ein zum Speichern elektrischer Energie innerhalb einer elektrischen Schaltung verwendeter Kondensator.

Das erfindungsgemäße Verfahren basiert auf Versorgung der Ferneinheit mit verringertem und konstantem Strom IR über den Kabelbaum, der kleiner als der Abwärtswandlerversorgungsstrom IIN ist. Um die Ferneinheit 2 mit konstantem Strom zu versorgen, ist der Schalt-Aufwärtswandler 8 (nicht auf eine bestimmte Topologie beschränkt), der die Ausgangsspannungsrückkopplungsschleife des Aufwärtswandlers 8c und den mit Ausgang 8b verbundenen Filterkondensator 8a aufweist, mit einer Ausgangsstromrückkopplung unter Verwendung eines Nebenschlusswiderstands RS 8d versehen. Der Ausgangsstrom wird in eine Differenzspannung umgewandelt und wird durch Erfassungseingänge CS+ 8f und CS- 8e gemessen.

Während der Lastpulsaktivierungszeitdauer wird ein Teil des Abwärtswandlerstroms IIN dem Tankkondensator CT 16 zugeführt und die Spannung UINB=UIN wird auf einen niedrigeren Wert UIN_min abnehmen. Die verbleibende Zeit bis zum nächsten Puls wird während der Zeit t_chg zum Wiederaufladen des Tankkondensators mit dem Konstantstrom IR verwendet.

Die Tankkondensatorspannungsentladung während der Lastpulsaktivierungszeitdauer t_on und der Ladezeit t_charge werden durch die folgenden Gleichungen gegeben:

$$UIN - UIN\_min = \Delta U = (IIN - IR) \cdot \frac{t_{on}}{Ca}$$

$(F7)$

$$t\_charge = \Delta U \cdot \frac{Ca}{IIN} = (IIN - IR) \cdot \frac{t_{on}}{IIN} \qquad (F8)$$

wobei gilt: Ca repräsentiert die elektrische Kapazität des Tankkondensators CT.

Man beobachtet, dass die Tankkondensatorladezeit t_charge (als t_chg abgekürzt) nicht vom Kondensatorwert abhängt.

Unter Berücksichtigung eines früheren Beispiels: für UR=27 V, IR=0,2 A, RP=RN=0,5_, ULED=9 V, ILED=2 A, t_on=3 ms, T=33 ms, _13=0,85, _8=0,9, CT=470 µF und IIN= 0,809 A erhalten wir: _U=3,89 V, t_charge=9,14 ms Kabelbaumverlustleistung PDH=0,04 W, die mittlere Kabelbaumverlustleistung ist PDH_avg=0,015 W und der Batteriestrom IBATT=0,45 A. Die Kabelbaumverlustleistung ist in diesem Falle um einen Faktor 82 verringert, was 0,22% der installierten Leistung der LEDs repräsentiert.

Wegen niedriger Stromschwankungen in den Kabelbaum ist die Signatur geleiteter Emission verringert.

Fig.8 zeigt das Timingdiagramm und verknüpfte Wellenformen der durch Fig.7 präsentierten Schaltungsanordnungen.

Die Vorteile der vorliegenden Erfindung werden hier weiter präsentiert.

Vorteile verringerter Kabelbaumverlustleistung:

- Erhöhter Lösungswirkungsgrad wegen verringerter elektrischer Verluste.
- Kabel mit geringer Querschnittsfläche können wegen verringerter Leistungsverluste ausgewählt werden:

    a. Günstiger Kabelbaum wegen verringerter Materialmenge.
    b. Leichtgewichtiger Kabelbaum wegen verringerter Materialmenge.
    c. Längere Kabelbaumlänge mit erträglichen Leistungsverlusten.

Vorteile verringerter Signatur geleiteter Emissionen:

- Verringerte Störung anderer Ausrüstungen
- Kostengünstiger Kabelbaum, wie etwa Twisted Pair oder billiges Koaxialkabel (nicht stark abgeschirmt).

Weiterer Vorteil:

- Erhöhte Stabilität, da die Tankkondensatorladezeit nicht von dem Tankkondensatorwert abhängt. Anfangstoleranz, Temperaturdrift und Alterung verschlechtern nicht das zeitliche Verhalten der Lösung.

Die vorliegende Erfindung kann unter anderem auf Auto- und Flugzeugcockpits, Überwachung, Robovision oder einen beliebigen anderen Platz und Anwendungen angewandt werden, wo eine Fernversorgung hochstromgepulster Lasten mit niedrigem Leistungsverlust und verringerter Signatur geleiteter Emissionen nötig ist.

**Patentansprüche**

1. Schaltungsanordnung (D) zum Fernversorgen elektrischer stromgepulster Lasten von einer Versorgungseinheit zu einer fernversorgten Einheit mit niedrigem Leistungsverlust und verringerter Signatur geleiteter Emissionen, wobei die Schaltungsanordnung Folgendes umfasst:

    eine Versorgungseinheit (1d),
    eine fernversorgte Einheit (2d),
    eine elektrische Last (15), platziert in der fernversorgten Einheit (2d),
    eine Eingangsschutzschaltung (7), platziert in der Versorgungseinheit (1d),
    einen ersten Kabelbaumdraht (5) und einen zweiten Kabelbaumdraht (6), welcher die fernversorgte Einheit (2d) mit der Versorgungseinheit (1d) verbindet,
    einen Aufwärtswandler (8), platziert in der Versorgungseinheit (1d),
    wobei der Aufwärtswandler (8) den Zweck hat, die Spannung an dessen Eingang zu dessen Ausgang hochzusetzen, während der Strom runtergesetzt wird,
    einen Aufwärtswandlerfilterkondensator (8a), platziert in der Versorgungseinheit (1d),
    einen Abwärtswandler (13), platziert in der fernversorgten Einheit (2d), wobei der Abwärtswandler (13) den Zweck hat, die Spannung an dessen Eingang zu dessen Ausgang runterzusetzen, während der Strom hochgesetzt wird,
    einen Ausgangskondensator (14), platziert in der fernversorgten Einheit (2d),
    **gekennzeichnet durch**:

    ein erstes elektrisches Filter (17) bestehend aus einer ersten Induktivität (10) und einem ersten Kondensator (9), platziert in der Versorgungseinheit (1d),
    ein zweites elektrisches Filter (18) bestehend aus einer zweiten Induktivität (11) und einem zweiten Kondensator (12), platziert in der fernversorgten Einheit (2d), einen mit dem Eingang des Abwärtswandlers (13) verbundenen Tankkondensator (16), platziert in der fernversorgten Einheit (2d), wobei der Tankkondensator (16) den Zweck hat, elektrische Energie zu speichern,
    wobei das erste elektrische Filter (17) und das zweite elektrische Filter (18) den Zweck haben, die hohen und mittleren Frequenzen des zugeführten Stroms zu filtern, indem ihnen nicht erlaubt wird, sich über den Kabelbaum zu verbreiten,
wobei der Aufwärtswandler (8) eine Ausgangsspannungsrückkopplungsschleife (8b, 8c) und einen mit dem Ausgang (8b) verbundenen Filterkondensator (8a) und eine Ausgangsstromrückkopplungsschleife (8e, 8f) unter Verwendung eines Nebenschlusswiderstands (RS 8d) aufweist,
wobei die Spannungsrückkopplungsschleife (8b, 8c) und die Stromrückkopplungsschleife (8e, 8f) den Zweck haben, Betriebssteuerung für den Aufwärtswandler (8) auszuüben, mit dem Ziel, die Stabilität des Aufwärtswandlers (8) während des Betriebs aufrechtzuerhalten,
wobei der Nebenschlusswiderstand (RS 8d) dazu ausgelegt ist, den Ausgangsstrom des Aufwärtswandlers (8) in eine Differenzspannung umzuwandeln und der Aufwärtswandler (8) Erfassungseingänge (CS+ 8f, CS- 8e) umfasst zum Messen der Differenzspannung,
wobei der Abwärtswandler (13) einen Eingang (EN, 13f) zum Empfangen eines Lastpulsaktivierungssignals (UCTL) umfasst.

2. Schaltungsanordnung nach Anspruch 1, wobei das erste elektrische Filter (17), in der Versorgungseinheit (1d) platziert, und das zweite elektrische Filter (18), in der versorgten Einheit (2d) platziert, ausgelegt sind zum Filtern der mittleren Frequenzen in dem Bereich von 100 kHz bis 26 MHz und der hohen Frequenzen in dem Bereich von 26 MHz bis 2,4 GHz für den zugeführten Strom, indem nicht zugelassen wird, diese über den Kabelbaum zu verbreiten und dadurch die serielle Datenübertragung ohne Störungen über die Kabelbaumdrähte zu ermöglichen, gleichzeitig mit der Übertragung von durch die Versorgungseinheit (1d) der versorgten Einheit (2d) zugeführtem elektrischen Strom.

3. Schaltungsanordnung nach Anspruch 1, wobei die Eingangsschutzschaltung (7) die Rolle hat, während des Betriebs alle Komponenten der Schaltungsanordnung vor Beschädigung zu schützen.

4. Schaltungsanordnung nach Anspruch 1, wobei der Aufwärtswandler (8) dazu ausgelegt ist, Strom und Spannung über die Kabelbaumdrähte (5, 6) an die fernversorgte Einheit zu liefern.

5. Schaltungsanordnung nach Anspruch 1, wobei mindestens zwei Tankkondensatoren (CT) kaskadiert zu dem Eingang des Abwärtswandlers (13) in der fernversorgten Einheit (1d) parallelgeschaltet sind, was die Speicherung einer erhöhten Menge elektrischen Energie ermöglicht, die danach an die Last (15) geliefert wird.

6. Schaltungsanordnung nach Anspruch 5, wobei der Abwärtswandler (13) dazu ausgelegt ist, Strom und Spannung unter Verwendung der durch die kaskadierten Tankkondensatoren (CT) an die Last (15) zu liefern.

7. Verfahren zum Betrieb einer Schaltungsanordnung nach Anspruch 1 zum Versorgen elektrischer stromgepulster Lasten von einer Versorgungseinheit (1d) zu einer fernversorgten Einheit mit niedrigem Leistungsverlust und verringerter Signatur geleiteter Emissionen (2d), **gekennzeichnet durch**:

eine Versorgung mit elektrischem Strom von einer Versorgungseinheit (1d) zu einer fernversorgten Einheit (2d) mit verringertem und konstantem Strom (IR) über Kabelbaumdrähte (5, 6), kleiner als der Versorgungsstrom (IIN) des Abwärtswandlers (13),
eine Versorgung mit elektrischem Strom von der Versorgungseinheit (1d) zu der versorgten Einheit (2d), verteilt über eine Zeitperiode, unter Verwendung des ersten Kabelbaumdrahts (5) und des zweiten Kabelbaumdrahts (6), auf derartige Weise, um den in der versorgten Einheit (2d) platzierten Tankkondensator (CT) aufzuladen,
wobei die für die elektrische Stromversorgung zwischen der Versorgungseinheit (1d) und der versorgten Einheit (2d) verwendete Zeitperiode der Ladezeitperiode (t_chg) des in der versorgten Einheit (2d) platzierten Tankkondensators (CT) entspricht,
eine Zykluszeit T, während welcher das Laden und Entladen des Tankkondensators (CT) vorgenommen werden, wobei die Zeit T gleichzeitig die Wiederholungsperiode für die Verwendung des Lastpulsaktivierungssignals (UCTL) ist,
eine Ladedauer (t_chg) des Tankkondensators (CT), während welcher der Tankkondensator mit einem Konstantstrom (IR) versorgt wird,
eine Entladedauer des Tankkondensators (CT), welche gleich einer durch das Lastpulsaktivierungssignal (UCTL) ausgelösten Lastpulsaktivierungszeitdauer (t_on) ist, und
während welcher die elektrische Last (15) durch den Abwärtswandler (13) mit Konstantstrom versorgt wird und ein Teil des Abwärtswandlerstroms (IIN) von dem Tankkondensator (CT) zugeführt wird und die Spannung (UINB=UIN) des Tankkondensators auf einen niedrigeren Wert (UIN_min) abnehmen wird,
eine Spannungsentladungsgröße (ΔU) des Tankkondensators, welche die Gesamtspannungsentladung ist, die an dem Ende der Lastpulsaktivierungszeitdauer (t_on) erhalten wird.

**Claims**

1. Circuit arrangement (D) for remotely supplying electric current-pulsed loads from a supply unit to a remotely supplied unit with a low power loss and a reduced conducted emissions signature, wherein the circuit arrangement comprises the following:

    a supply unit (1d),
    a remotely supplied unit (2d),
    an electric load (15) placed in the remotely supplied unit (2d),
    an input protection circuit (7) placed in the supply unit (1d),
    a first harness wire (5) and a second harness wire (6) connecting the remotely supplied unit (2d) to the supply unit (1d),
    a step-up converter (8) placed in the supply unit (1d),
    wherein the step-up converter (8) has the purpose of stepping up the voltage at its input to its output while the current is stepped down,
    a step-up converter filtering capacitor (8a) placed in the supply unit (1d),
    a step-down converter (13) placed in the remotely supplied unit (2d), wherein the step-down converter (13) has the purpose of stepping down the voltage at its input to its output while the current is stepped up,
    an output capacitor (14) placed in the remotely supplied unit (2d),
    **characterized by**:

        a first electric filter (17) consisting of a first inductor (10) and of a first capacitor (9), said first electric filter being placed in the supply unit (1d),
        a second electric filter (18) consisting of a second inductor (11) and of a second capacitor (12), said second electric filter being placed in the remotely supplied unit (2d),
        a tank capacitor (16) connected to the input of the step-down converter (13) and placed in the remotely supplied unit (2d),
        wherein the tank capacitor (16) has the purpose of storing electric energy,
        wherein the first electric filter (17) and the second electric filter (18) have the purpose of filtering the high and mid frequencies of the supplied current by not allowing them to pass over the harness,
        wherein the step-up converter (8) has an output voltage feedback loop (8b, 8c) and a filtering capacitor (8a) connected to the output (8b) and an output current feedback loop (8e, 8f) using a shunt resistor (RS 8d),
        wherein the voltage feedback loop (8b, 8c) and the current feedback loop (8e, 8f) have the purpose of performing operational control for the step-up converter (8) with the aim of maintaining the stability of the step-up converter (8) during operation,
        wherein the shunt resistor (RS 8d) is designed to convert the output current of the step-up converter (8) into a differential voltage and the step-up converter (8) comprises sense inputs (CS+ 8f, CS- 8e) for measuring the differential voltage,
        wherein the step-down converter (13) comprises an input (EN, 13f) for receiving a load pulse activation signal (UCTL).

2. Circuit arrangement according to Claim 1, wherein the first electric filter (17) placed in the supply unit (1d) and the second electric filter (18) placed in the supplied unit (2d) are designed to filter the mid frequencies in the range from 100 kHz to 26 MHz and the high frequencies in the range from 26 MHz to 2.4 GHz for the supplied current by not permitting these frequencies to pass over the harness and as a result enabling the serial data transmission over the harness wires without interference, simultaneously with the transmission of electric current supplied by the supply unit (1d) to the supplied unit (2d).

3. Circuit arrangement according to Claim 1, wherein the input protection circuit (7) has the role of protecting all the components of the circuit arrangement from damage during operation.

4. Circuit arrangement according to Claim 1, wherein the step-up converter (8) is designed to deliver current and voltage to the remotely supplied unit over the harness wires (5, 6).

5. Circuit arrangement according to Claim 1, wherein at least two tank capacitors (CT) are connected in parallel with the input of the step-down converter (13) in the remotely supplied unit (1d) in cascaded fashion, allowing the storage of an increased quantity of electric energy which is afterwards delivered to the load (15).

6. Circuit arrangement according to Claim 5, wherein the step-down converter (13) is designed to deliver current and voltage to the load (15) using the by the cascaded tank capacitors (CT).

7. Method of operating a circuit arrangement according to Claim 1 to supply electric current-pulsed loads from a supply unit (1d) to a remotely supplied unit (2d) with a low power loss and a reduced conducted emissions signature, **characterized by**:

a supply of electric current from a supply unit (1d) to a remotely supplied unit (2d) with a reduced and constant current (IR) over harness wires (5, 6), smaller than the supply current (IIN) of the step-down converter (13), a supply of electric current from the supply unit (1d) to the supplied unit (2d), distributed over a period of time, using the first harness wire (5) and the second harness wire (6), in such a way as to charge the tank capacitor (CT) placed in the supplied unit (2d), wherein the period of time used for the electric current supply between the supply unit (1d) and the supplied unit (2d) corresponds to the charging time period (t_chg) of the tank capacitor (CT) placed in the supplied unit (2d), a cycle time T during which the tank capacitor (CT) is charged and discharged, wherein the time T is simultaneously the repetition period for using the load pulse activation signal (UCTL), a charging duration (t_chg) of the tank capacitor (CT) during which the tank capacitor is supplied with a constant current (IR), a discharging duration of the tank capacitor (CT) which is equal to a load pulse activation time duration (t_on) triggered by the load pulse activation signal (UCTL), and during which the electric load (15) is supplied with constant current by the step-down converter (13) and a part of the step-down converter current (IIN) is supplied from the tank capacitor (CT) and the voltage (UINB=UIN) of the tank capacitor will decrease to a lower value (UIN_min), a voltage discharge quantity (ΔU) of the tank capacitor which is the total voltage discharge obtained at the end of the load pulse activation time duration (t_on).

**Revendications**

1. Agencement de circuits (D) permettant d'alimenter à distance des charges électriques, pulsées par courant, d'une unité d'alimentation à une unité alimentée à distance, avec une faible perte de puissance et une signature réduite d'émissions conduites, l'agencement de circuits comprenant :

une unité d'alimentation (1d),
une unité alimentée à distance (2d),
une charge électrique (15) placée dans l'unité alimentée à distance (2d),
un circuit de protection d'entrée (7) placé dans l'unité d'alimentation (1d),
un premier fil de faisceau de câble (5) et un deuxième fil de faisceau de câble (6) qui relie l'unité alimentée à distance (2d) à l'unité d'alimentation (1d),
un convertisseur élévateur (8) placé dans l'unité d'alimentation (1d),
le convertisseur élévateur (8) servant à élever la tension au niveau de son entrée alors que le courant est abaissé,
un condensateur de filtrage de convertisseur élévateur (8a) placé dans l'unité d'alimentation (1d),
un convertisseur abaisseur (13) placé dans l'unité alimentée à distance (2d), le convertisseur abaisseur (13) servant à abaisser la tension au niveau de son entrée vers sa sortie alors que le courant est élevé,
un condensateur de sortie (14) placé dans l'unité alimentée à distance (2d),
**caractérisé par** :

un premier filtre électrique (17) composé d'une première inductance (10) et d'un premier condensateur (9) placés dans l'unité d'alimentation (1d),
un deuxième filtre électrique (18) composé d'une deuxième inductance (11) et d'un deuxième condensateur (12) placés dans l'unité alimentée à distance (2d),
un condensateur réservoir (16) relié à l'entrée du convertisseur abaisseur (13) et placé dans l'unité alimentée à distance (2d),
le condensateur réservoir (16) servant à accumuler de l'énergie électrique,
le premier filtre électrique (17) et le deuxième filtre électrique (18) servant à filtrer les fréquences hautes et moyennes du courant amené en ne leur permettant pas de se propager par le faisceau de câble,
le convertisseur élévateur (8) présentant une boucle de rétroaction de tension de sortie (8b, 8c) et un condensateur de filtrage (8a) relié à la sortie (8b) et une boucle de rétroaction de courant de sortie (8e, 8f) en utilisant une résistance en dérivation (RS 8d),
la boucle de rétroaction de tension (8b, 8c) et la boucle de rétroaction de courant (8e, 8f) servant à exercer une commande de fonctionnement pour le convertisseur élévateur (8) dans le but de maintenir la stabilité du convertisseur élévateur (8) pendant le fonctionnement,
la résistance en dérivation (RS 8d) étant conçue pour convertir le courant de sortie du convertisseur élévateur (8) en une tension différentielle, et le convertisseur élévateur (8) comprenant des entrées de détection (CS+ 8f, CS- 8e) pour mesurer la tension différentielle,
le convertisseur abaisseur (13) comprenant une entrée (EN, 13f) pour recevoir un signal d'activation d'impulsion de charge (UCTL).

**2.** Agencement de circuits selon la revendication 1, dans lequel le premier filtre électrique (17) placé dans l'unité d'alimentation (1d), et le deuxième filtre électrique (18) placé dans l'unité alimentée (2d) sont conçus pour filtrer les fréquences moyennes dans la plage de 100 kHz à 26 MHz et les fréquences hautes dans la plage de 26 MHz à 2,4 GHz pour le courant amené en ce qu'ils ne leur permettent pas de se propager par le faisceau de câble, et pour permettre ainsi la transmission de données série sans perturbations par les fils de faisceau de câble, en même temps que la transmission du courant électrique amené par l'unité d'alimentation (1d) à l'unité alimentée (2d).

**3.** Agencement de circuits selon la revendication 1, dans lequel le circuit de protection d'entrée (7) est destiné à protéger tous les composants de l'agencement de circuits contre les dommages pendant le fonctionnement.

**4.** Agencement de circuits selon la revendication 1, dans lequel le convertisseur élévateur (8) est conçu pour fournir du courant et de la tension par les fils de faisceau de câble (5, 6) à l'unité alimentée à distance.

**5.** Agencement de circuits selon la revendication 1, dans lequel au moins deux condensateurs réservoirs (CT) sont montés en parallèle, en cascade par rapport à l'entrée du convertisseur abaisseur (13) dans l'unité alimentée à distance (1d), ce qui permet d'accumuler une plus grande quantité d'énergie électrique qui sera ensuite fournie à la charge (15).

**6.** Agencement de circuits selon la revendication 5, dans lequel le convertisseur abaisseur (13) est conçu pour fournir du courant et de la tension à la charge (15) en utilisant les condensateurs réservoirs (CT) en cascade.

**7.** Procédé d'exploitation d'un agencement de circuits selon la revendication 1 pour alimenter des charges électriques, pulsées par courant, d'une unité d'alimentation (1d) à une unité alimentée à distance, avec une faible perte de puissance et une signature réduite d'émissions conduites (2d),
**caractérisé par** :

une alimentation en courant électrique d'une unité d'alimentation (1d) à une unité alimentée à distance (2d) à courant réduit et constant (IR) par des fils de faisceau de câble (5, 6), inférieur au courant d'alimentation (IIN) du convertisseur abaisseur (13),
une alimentation en courant électrique de l'unité d'alimentation (1d) à l'unité alimentée (2d), de manière répartie sur une période de temps, en utilisant le premier fil de faisceau de câble (5) et le deuxième fil de faisceau de câble (6), de façon à recharger le condensateur réservoir (CT) placé dans l'unité alimentée (2d), dans lequel, la période de temps utilisée pour l'alimentation en courant électrique entre l'unité d'alimentation (1d) et l'unité alimentée (2d) correspond à la période de temps de charge (t_chg) du condensateur réservoir (CT) placé dans l'unité alimentée (2d),
un temps de cycle T pendant lequel la charge et la décharge du condensateur réservoir (CT) sont effectuées, le temps T étant en même temps la période de répétition pour l'utilisation du signal d'activation d'impulsion de charge (UCTL),
une durée de charge (t_chg) du condensateur réservoir (CT) pendant laquelle le condensateur réservoir est alimenté par un courant constant (IR),
une durée de décharge du condensateur réservoir (CT) qui est égale à une durée de temps d'activation d'impulsion de charge (t_on) déclenchée par le signal d'activation d'impulsion de charge (UCTL), et pendant laquelle la charge électrique (15) est alimentée en courant constant par le convertisseur abaisseur (13), et une partie du courant de convertisseur abaisseur (IIN) est amené par le condensateur réservoir (CT), et la tension (UINB=UIN) du condensateur réservoir descendra à une valeur inférieure (UIN_min),

une grandeur de décharge de tension ($\Delta U$) du condensateur réservoir qui est la décharge de tension totale qui est obtenue à la fin de la durée de temps d'activation d'impulsion de charge (t_on).

FIG 1

FIG 2

FIG 3

FIG 4

FIG 5

## FIG 6

# FIG 7

EP 3 635 834 B1

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160182107 A1
- US 2016330397 A1
- US 2016291663 A1